Europäisches Patentamt

European Patent Office

Office européen des brevets

(11) Veröffentlichungsnummer: **0 509 248 A2**

# EUROPÄISCHE PATENTANMELDUNG

(21) Anmeldenummer: **92104433.5**

(51) Int. Cl.⁵: **F16B  13/06**

(22) Anmeldetag: **14.03.92**

(30) Priorität: **15.04.91 DE 4112225**

(43) Veröffentlichungstag der Anmeldung:
**21.10.92 Patentblatt  92/43**

(84) Benannte Vertragsstaaten:
**AT BE DE DK FR GB IT NL**

(71) Anmelder: **"TOGE-DÜBEL" A. Gerhard GmbH**
**Illesheimer Strasse 10**
**W-8500 Nürnberg 80(DE)**

(72) Erfinder: **Gerhard, Anton**
**Illesheimer Strasse 10**
**W-8500 Nürnberg 80(DE)**

(74) Vertreter: **Rau, Manfred, Dr. Dipl.-Ing. et al**
**Rau & Schneck, Patentanwälte Königstrasse**
**2**
**W-8500 Nürnberg 1(DE)**

(54) **Spreizdübel.**

(57) Ein Spreizdübel besteht in üblicher Weise aus einer Spreiz-Hülse (1), einer Spreiz-Schraube (2) und einem zum Spreizen der Spreiz-Hülse (1) dienenden Spreiz-Konus (3'), der mittels der Spreiz-Schraube (2) in die Spreiz-Hülse (1) hineinziehbar ist. Um den Materialeinsatz für den Spreiz-Konus (3') und den Herstellungsaufwand zu reduzieren, ist der Spreiz-Konus (3') aus Blech geformt. Er weist einen zylindrischen Abschnitt (15') auf, von dessen Kanten (18', 19') zwei Lappen (37, 38) nach außen gebogen sind, die an ihrer Stoßfuge (39) miteinander verschweißt sind. Hierdurch wird eine feste Verbindung des Spreiz-Konus (3') in sich geschaffen und außerdem ein als Verdrehsicherung in einem Schlitz der Spreiz-Hülse (1) geführter Anschlag (21').

FIG. 2

EP 0 509 248 A2

Die Erfindung betrifft einen Spreizdübel nach dem Oberbegriff des Anspruches 1.

Ein derartiger Spreizdübel ist in der älteren, nicht vorveröffentlichten EP-A-0 423 460 beschrieben;

Da der Spreiz-Konus bei dem Spreizdübel nach dieser Veröffentlichung aus Blech hergestellt wird, weist er im Vergleich zu einem massiven Spreiz-Konus aus Zink-Druckguß ein verhältnismäßig geringes Volumen auf. Er kann also aus Stahlblech gefertigt werden. Trotzdem ist sein Gewicht niedriger als das eines Spreiz-Konus aus Zink. Weiterhin ist Stahl erheblich billiger als Zink, so daß die Kosten besonders stark sinken. Darüber hinaus ist die Festigkeit von Stahl erheblich höher als die von Zink. Durch die Art der Verbindung wird sichergestellt, daß ein Verziehen des Spreiz-Konus oder ein Ineinanderrutschen der Wandbereiche des Spreiz-Konus an der Stoßfuge vermieden wird.

Der Erfindung liegt die Aufgabe zugrunde, die Herstellung des Spreiz-Konus noch weiter zu vereinfachen und seine Festigkeit gleichzeitig zu erhöhen.

Diese Aufgabe wird erfindungsgemäß durch die Merkmale im Kennzeichnungsteil des Anspruches 1 gelöst. Durch die erfindungsgemäßen Maßnahmen wird einerseits ein als Verdrehsicherung dienender Anschlag gebildet, wobei die beiden Lappen bzw. Fahnen, aus denen er gebildet wird, gleichzeitig fest miteinander verbunden, und zwar insbesondere stumpf verschweißt, werden. Hierdurch wird der Konus gegen ein Verziehen oder ein Ineinanderrutschen der Wandbereiche sicher geschützt.

Durch die Weiterbildung nach Anspruch 2 wird erreicht, daß der zylindrische Abschnitt in seinem Außenbereich unverformt bleibt und daß trotzdem das Innengewinde in den zylinrischen Abschnitt eingeformt werden kann.

Durch die Weiterbildung nach Anspruch 3 wird sichergestellt, daß auch im Bereich des Innengewindes der zylindrische Abschnitt des Konus in sich sehr steif ist, so daß die Gewindegänge des Innengewindes auch an ihrer Stoßstelle miteinander fluchten. Die Ansprüche 4 und 5 geben vorteilhafte Größenverhältnisse an. Während Anspruch 6 zum Inhalt hat, daß die Lappen bzw. Fahnen miteinander verschweißt sind, stellt Anspruch 7 klar, daß im Bereich der sonstigen Stoßfuge keine Verbindung vorhanden sein muß.

Die Ansprüche 8 und 9 geben weitere Ausgestaltungen an.

Weitere Merkmale, Vorteile und Einzelheiten der Erfindung ergeben sich aus der nachfolgenden Beschreibung eines Ausführungsbeispieles der Erfindung anhand der Zeichnung. Es zeigt

Fig. 1 einen aus Spreiz-Hülse, Spreiz-Schraube und Spreiz-Konus bestehenden Spreizdübel in einer Längs-Draufsicht

Fig. 2 den Spreiz-Konus des Spreizdübels in stark vergrößerter Darstellung in einer teilweise aufgebrochenen Längs-Draufsicht

Fig. 3 eine Stirnansicht des Spreiz-Konus entsprechend dem Sichtpfeil III in Figur 2 und

Fig. 4 eine Stirnansicht des Spreiz-Konus entsprechend dem Sichtpfeil IV in Fig. 2.

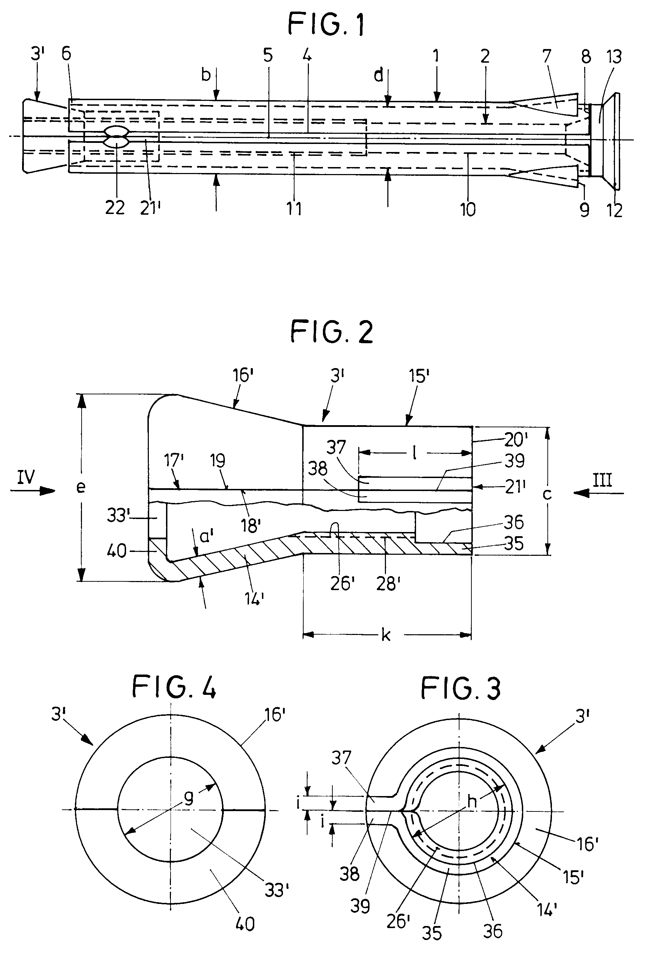

Der in Figur 1 dargestellte Spreizdübel besteht aus drei Teilen, nämlich einer Spreiz-Hülse 1, einer Spreiz-Schraube 2 und einem Spreiz-Konus 3'. Spreiz-Hülse 1 und Spreiz-Schraube 2 sind in üblicher Weise ausgestaltet.

Die Spreiz-Hülse 1 ist zylindrisch ausgebildet und aus Blech gebogen. Sie weist einen sich über die volle Länge der Hülse 1 erstreckenden Schlitz 4 auf, der parallel zur Mittel-Längs-Achse 5 verläuft. Darüber hinaus weist sie mindestens im Bereich ihres Einschub-Endes 6, also dort, wo sich der Spreiz-Konus 3' befindet, ein oder mehrerere zusätzliche, in der Zeichnung nicht erkennbare Schlitze auf. Auch im Bereich des dem Einschub-Ende 6 entgegengesetzten Endes können noch ein oder mehrere Schlitze vorgesehen sein. Dort befinden sich auch mehrere aus der Spreiz-Hülse 1 herausgeformte Vorsprünge 7, die zur Verankerung der Spreiz-Hülse 1 im Mauerwerk, Beton oder dergleichen dienen können, oder deren dem benachbarten Rand 8 der Hülse 1 zugewandte Stirnflächen als Auflageflächen 9 für am Mauerwerk, Beton oder dergleichen zu befestigende Gegenstände, wie beispielsweise Metallrahmen oder dergleichen, insbesondere Fensterrahmen oder Türrahmen, dienen.

Die Spreiz-Schraube 2 weist einen zylindrischen Bolzen 10 auf, der zumindest über einen Teil seiner Länge mit einem Außengewinde 11 versehen ist, das in den Spreiz-Konus 3' hineingeschraubt wird. Die Schraube 2 weist weiterhin einen Kopf 12 auf, der mit einem dem Bolzen 10 zugewandten Ringbund 13 versehen ist, der gegen den Rand 8 der Hülse 1 anliegt, so daß eine lagegenaue Abstützung des Kopfes 12 der Schraube 2 gegen die Hülse 1 erreicht ist. Bei Anziehen der Spreiz-Schraube 2 wird somit der Spreiz-Konus 3' in das Einschub-Ende 6 der Hülse 1 hineingezogen und weitet diese auf. Insoweit als der Spreizdübel bis jetzt beschrieben ist, ist er allgemein bekannt und in der Praxis bewährt.

Der Spreiz-Konus 3' ist ebenfalls bevorzugt aus Stahlblech hergestellt, er weist also eine Wand 14' auf, deren Dicke a' dort, wo die Wand 14' nicht verformt ist, etwa überall gleich ist und 7 bis 13 %, bevorzugt 9 bis 11 %, des Außendurchmessers b der Spreiz-Hülse 1 beträgt.

Der Konus 3' weist einen zylindrischen Abschnitt 15' auf, dessen Außendurchmesser c etwas kleiner ist als der Innendurchmesser d der Spreiz-Hülse 1. Die Differenz dieser beiden Durchmesser c und d soll höchstens ein bis wenige Zehntel Millimeter betragen, um ein Einführen dieses zylindrischen Abschnitts 15 bei der Montage des Konus 3' in der Hülse 1 vom Einschub-Ende 6 her zu ermöglichen. Ein nicht notwendiges Spiel sollte nicht vorhanden sein. An den zylindrischen Abschnitt 15' schließt sich ein konusförmiger, d. h. kegelstumpfförmiger Abschnitt 16' an, dessen Außendurchmesser sich vom Außendurchmesser c des zylindrischen Abschnitts 15' bis zu einem Außendurchmesser e erweitert, der etwa gleich aber nicht größer ist als der Außendurchmesser b der Hülse 1, so daß der Spreiz-Konus 3' in unverspreiztem Zustand der Hülse 1 nicht radial über diese vorsteht. Dieser kegelstumpfförmige Abschnitt 16' ist also ein Spreizabschnitt des Spreiz-Konus 3'. Da der Spreiz-Konus 3' aus Blech geformt ist, weist er eine Stoßfuge 17' auf, die von zwei Kanten 18', 19' der Wand 14' begrenzt bzw. gebildet wird. Im Bereich des freien Endes 20' des zylindrischen Abschnitts 15' ist ein radial zur Achse 5 nach außen verlaufender Anschlag 21' gebildet. Dieser Anschlag 21' wird bei der Montage des Konus 3' in der Hülse 1 in den Schlitz 4 oder einen anderen der erwähnten Schlitze eingeführt und über mindestens einen Vorsprung 22 hinweggeschoben, der aus dem Material der Hülse 1 durch lokales Verquetschen erzeugt ist und in den Schlitz 4 hineinragt. Bei montiertem Konus 3' aber noch nicht gespreizter Hülse 1 liegt dieser Vorsprung 22 - wie Figur 1 erkennen läßt - auf der dem Einschub-Ende 6 abgewandten Seite des mindestens einen Vorsprungs 22, so daß der Konus 3' verliersicher in der Hülse 1 gehalten ist, auch wenn er nicht durch die Schraube 2 in der Hülse 1 gehalten wird. Gegen ein Hineinrutschen des Konus 3' in die Hülse 1 ist ersterer durch seinen kegelstumpfförmigen Abschnitt 16' gesichert. Außerdem wird durch den im Schlitz 4 verschiebbaren Anschlag 21' eine Verdrehsicherung für den Spreiz-Konus 3' relativ zur Spreiz-Hülse 1 geschaffen, da nur bei einer solchen relativen Unverdrehbarkeit gegeneinander bei Verdrehen der Schraube 2 gegenüber der Hülse 1 der Konus 3' in die Hülse 1 hineingezogen werden kann.

Im Bereich des freien Endes 20' des Konus 20' des Konus 3' ist ein verjüngter Abschnitt 35 ausgebildet. An diesem schließt sich ein Innengewinde 26' an, das zur Aufnahme des Außengewindes 11 der Schraube 2 dient. Der Innendurchmesser h der zylindrischen Innenseite 36 des verjüngten Abschnittes 35 ist auf jeden Fall so groß, daß der Gewindegrund 28' des Innengewindes 26' innerhalb dieser Innenseite 36 liegt, so daß der Bolzen 10 mit dem Außengewinde 11 durch den zylindrischen Abschnitt 15' eingeführt werden kann. Andererseits muß für die Ausbildung des Innengewindes 26' genügend Material in der Wand 14' zur Verfügung stehen.

Der Anschlag 21' wird durch zwei Lappen oder Fahnen 37, 38 gebildet, die von den Kanten 18', 19' radial zur Achse 5 nach außen gebogen sind und dort aneinanderliegen. Ihre jeweilige Dicke i ist kleiner als die Dicke a' der Wand 14' des Konus 3'. Es gilt $0,8 \; a' \geq i \geq 0,5 \; a'$. Wie der Zeichnung entnehmbar ist, erstrecken sich die Lappen 37, 38 vom freien Ende 20' des zylindrischen Abschnitt 15' über die Hälfte bis Dreiviertel der Länge k des zylindrischen Abschnittes 15'. Sie erstrecken sich auf jeden Fall noch deutlich über den Bereich des Innengewindes 26'. Für die Länge 1 gilt also $0,75 \; k \geq 1 \geq 0,5 \; k$. Die beiden Lappen bzw. Fahnen 37, 38 sind an ihrer Stoßfuge 39 durch Schweißen, insbesondere durch Stumpfschweißen, miteinander verbunden, wodurch der Spreiz-Konus 3' seine Festigkeit bekommt. Wie der Zeichnung weiterhin zu entnehmen ist, erstrecken sich die Lappen bzw. Fahnen 37, 38 bis zum Außendurchmesser e des kegelstumpfförmigen Abschnittes 16'.

Am außerhalb der Spreiz-Hülse 1 liegenden Ende des kegelstumpfförmigen Abschnittes 16' ist ein radial nach innen, also zur Achse 5 hin, ragender Rand 40 vorgesehen, der eine stirnseitige Öffnung 33' des Konus 3' begrenzt. Der Durchmesser g dieser Öffnung 33' entspricht etwa dem Außendurchmesser des Außengewindes 11 der Schraube 2, so daß beim Einziehen des Konus 3' in die Hülse 1 der Konus 3' hier noch einmal zusätzlich gegenüber dem Bolzen 10 der Schraube 2 zentriert wird, wenn diese die Öffnung 33' durchdringt.

Dieser Spreiz-Konus 3' wird nach dem Ausstanzen durch Tiefziehen zu zwei einstückig miteinander verbundenen Halb-Spreiz-Konen verformt, die diametral gegenüber bzw. zwischen den Kanten 18', 19' miteinander verbunden sind. Bei diesem Tiefziehvorgang wird auch der verjüngte Abschnitt 35 durch entsprechende Verdrängung von Material geformt. Auch die Lappen bzw. Fahnen 37, 38 werden hierbei von der Dicke a' der Wand 14' auf die Dicke i durch entsprechende Materialverdrängung verformt. Anschließend werden diese beiden Hälften aufeinanderzu gebogen, wodurch sie in die in der Zeichnung dargestellte und zuvor beschriebenen Form gelangen. Dann werden die beiden Lappen 37, 38 im Bereich ihrer Stoßfuge 39 miteinander verschweißt. Schließlich wird das Innengewinde 26' geschnitten. Eine Verschweißung erfolgt nur zwischen den Lappen bzw. Fahnen 37, 38, also nicht im Bereich der sich bis zum Rand 40 hinziehenden Stoßfuge 17'.

**Patentansprüche**

1. Spreizdübel, bestehend aus einer zumindest über einen Teil ihrer Länge mit mindestens einem Schlitz (4) versehenen Spreiz-Hülse (1), einer konzentrisch zu einer gemeinsamen Mittel-Längs-Achse (5) hierin angeordneten und sich mit einem Kopf (12) an einem Rand (8) der Spreiz-Hülse (1) gegen diese abstützenden Spreiz-Schraube (2) und einem an einem dem Rand (8) entgegengesetzt liegenden Einschub-Ende (6) der Spreiz-Hülse (1) unverdrehbar gegenüber dieser gehaltenen und axial in dieser verschiebbaren Spreiz-Konus (3'), der ein Innengewinde (26') zur Aufnahme eines Außengewindes (11) der Spreiz-Schraube (2) und einen Spreizabschnitt (kegelstumpfförmiger Abschnitt 16') zum Aufspreizen des dem Einschub-Ende (6) zugeordneten Bereichs der Spreiz-Hülse (1) beim Hineinziehen dieses Spreizabschnitts mittels der Spreiz-Schraube (2) in die Spreiz-Hülse (1) aufweist, wobei der Spreiz-Konus (3') aus Blech geformt ist, wobei die Kanten (18', 19') seiner Wand (14') eine Stoßfuge (17') begrenzen und in Richtung der Mittel-Längs-Achse (5) und tangential hierzu fest miteinander verbunden sind und wobei von einer der die Stoßfuge (17') begrenzenden Kanten (18') ein in einen Schlitz (4) der Spreiz-Hülse (1) ragender, als Verdrehsicherung gegenüber letzterer dienender Anschlag (21) bezogen auf die Mittel-Längs-Achse (5) radial nach außen gebogen ist, dadurch gekennzeichnet, daß von beiden die Stoßfuge (17') begrenzenden Kanten (18', 19') im Bereich eines das Innengewinde (26') aufnehmenden zylindrischen Abschnitts (15') Lappen oder Fahnen (37, 38) radial zur Achse (5) nach außen abgebogen sind, die an einer Stoßfuge (39) unter Bildung des Anschlages (21) miteinander verbunden sind.

2. Spreizdübel nach Anspruch 1, dadurch gekennzeichnet, daß zwischen einem freien Ende (20') des zylindrischen Abschnitts (15') und dem Innengewinde (26') ein verjüngter Abschnitt (35) ausgebildet ist, wobei der Gewindegrund (28') des Innengewindes (26') innerhalb der etwa zylindrischen Innenseite (36) des verjüngten Abschnittes (35) liegt.

3. Spreizdübel nach Anspruch 1, dadurch gekennzeichnet, daß der Anschlag (21') sich zumindest über einen Teil der Länge des verjüngten Abschnittes (35) und des Innengewindes (26') erstreckt.

4. Spreizdübel nach Anspruch 1, dadurch gekennzeichnet, daß für die Länge (1) des Anschlages (21') im Vergleich zur Länge (k) des zylindrischen Abschnittes (15') gilt 0,75 k ≧ 1 ≧ 0,5 k.

5. Spreizdübel nach Anspruch 1, dadurch gekennzeichnet, daß für die Dicke (i) der Lappen bzw. Fahnen (37, 38) im Vergleich zur Dicke (a') der Wand (14') gilt 0,8 a' ≧ i ≧ 0,5a'.

6. Spreizdübel nach Anspruch 1, dadurch gekennzeichnet, daß die Lappen bzw. Fahnen (37, 38) an ihrer Stoßfuge (39) miteinander verschweißt sind.

7. Spreizdübel nach Anspruch 1, dadurch gekennzeichnet, daß die Wand (14') nur an der Stoßfuge (39) der Lappen bzw. Fahnen (37, 38) miteinander verbunden ist.

8. Spreizdübel nach Anspruch 1, dadurch gekennzeichnet, daß am freien Ende des Spreizabschnittes (kegelstumpfförmiger Abschnitt 16') ein radial nach innen zur Mittel-Längs-Achse (5) hin gebogener Rand (40) ausgebildet ist, der eine Zentrier-Öffnung (33') für die Spreiz-Schraube (2) begrenzt.

9. Spreizdübel nach Anspruch 1, dadurch gekennzeichnet, daß der Anschlag (21') zur Bildung einer Verliersicherung zwischen Spreiz-Hülse (1) und Spreiz-Konus (3') hinter mindestens einem in den Schlitz (4) ragenden, an der Spreiz-Hülse (1) ausgebildeten Vorsprung (22) angeordnet ist.

EP 0 509 248 A2

FIG. 1

FIG. 2

FIG. 4

FIG. 3

5